# EUROPEAN PATENT APPLICATION

(11) **EP 4 628 409 A1**
(43) Date of publication of application: **08.10.2025**
(21) Application number: 23895952.2
(22) Date of filing: 25.06.2023
(51) Int. Cl.: B64F 5/10, B64C 27/22

(54) **QUICK INSTALLATION METHOD FOR OUTBOARD ARM**

(30) Priority: 02.12.2022 US 202263385773 P; 02.12.2022 US 202263385771 P; 02.12.2022 US 202263385772 P
(71) Applicant: Autoflight (Kunshan) Co., Ltd., Suzhou, Jiangsu 215345 (CN)
(72) Inventor: TIAN, Yu, Suzhou, Jiangsu 215345 (CN); CUI, Yongqiang, Suzhou, Jiangsu 215345 (CN)
(74) Representative: MERH-IP Matias Erny Reichl Hoffmann Patentanwälte PartG mbB
(86) International application number: PCT/CN2023/102117
(87) International publication number: WO 2024/113788

(57) **Abstract**

The invention relates to the field of aircraft, and discloses a quick mounting method for an outboard arm, comprising S1: provide an outboard arm; S2: provide a fixed wing, wherein the inboard arm and the outboard arm are arranged in parallel on the fixed wing at intervals, the inboard arm and the outboard arm are aligned on the same horizontal plane in terms of height, and the power source with propeller is distributed on the inboard arm and on the outboard arm; S3: secure the outboard arm to the fixed wing, and a distance between the outboard arm and the inboard arm is at least greater than the sum of a rotating radius of the propeller on the inboard arm, a rotating radius of the propeller on the outboard arm, and a convection clearance.

## Description

### TECHNICAL FIELD

The invention relates to the field of aircraft, in particular to a quick mounting method for an outboard arm.

### BACKGROUND

With the promotion of vertical take-off and landing aircraft, its advantages are gradually emerging. It basically does not require special airports and runways, and is free from dependence on runways. It is suitable for complex work scenarios with limited take-off and landing sites, such as tourism, logistics and transportation, medical emergency, firefighting and disaster relief, search and rescue, air law enforcement, air taxis, air ambulances, etc. In the face of different requirements of complex work scenarios, vertical take-off and landing aircraft are found to be unable to quickly carry the increased take-off weight, such as emergency medical emergency and firefighting and disaster relief. On the other hand, it is unable to quickly reduce noise and energy consumption, such as entering low altitude in the city, the decibel of the propeller needs to be reduced, or the motor loss needs to be reduced due to insufficient power due to air traffic congestion.

### SUMMARY

The purpose of the present invention is to provide a method for quickly installing an outboard arm, which is simple to operate and can achieve the purpose of quickly installing and removing the outboard arm on a fixed wing within 30 minutes.

To achieve this purpose, the invention adopts the following technical schemes:
The invention provides a quick mounting method for an outboard arm, comprising:
S1: provide an outboard arm;
S2: provide a fixed wing, wherein the inboard arm and the outboard arm are arranged in parallel on the fixed wing at intervals, the inboard arm and the outboard arm are aligned on the same horizontal plane in terms of height, and the power source with propeller is distributed on the inboard arm and on the outboard arm;
S3: secure the outboard arm to the fixed wing, and the distance between the outboard arm and the inboard arm is at least greater than the sum of the rotating radius of the propeller on the inboard arm, the rotating radius of the propeller on the outboard arm and the convection clearance.

Preferably, the convection clearance is defined as 8% to 15% of a maximum of a propeller diameter on the outboard arm and on the inboard arm.

Preferably, the mounting of the outboard arm to the fixed wing comprises: secure the outboard arm to the leading edge of the fixed wing, or secure the outboard arm to the trailing edge of the fixed wing, or secure the outboard arm to the leading edge and to the trailing edge of the fixed wing respectively.

Preferably, the outboard arm comprises an arm recess, the cross section of the arm recess in the longitudinal direction is an inverted isosceles trapezoid and is used to fit the contour separation surface of the fixed wing.

Preferably, the arm recess is provided with a reinforcing rib and a plurality of fixing seats in the longitudinal direction; before the S3 it also comprises S300:
after aligning the outboard arm in the width direction with the reinforcing rib as the symmetry center, attach a pair of fixing seats on the arm recess at intervals in the longitudinal direction of the outboard arm.

Preferably, the fixed wing is provided with a wing protrusion at the connection position with the outboard arm, and the cross section of the wing protrusion in the longitudinal direction is a right isosceles trapezoid; The S300 further comprises: cover the arm recess with the wing protrusion.

Preferably, a fastener support is provided on each fixing seat, and each fastener support is provided with a threaded hole, and the wing protrusion is provided with an opening corresponding to each threaded hole;
S3 comprises:
After the main bolt is inserted through the opening on the wing protrusion, the wing protrusion and the arm recess are fixedly connected through the threaded hole of the fastener support.

Preferably, the wing protrusion is provided with a reinforcing part along its length direction, and the reinforcing part is provided with threaded holes at equal intervals on the outer circumferential surface near the junction connected with the arm recess, and corresponding threaded holes are provided in the arm recess.

S3 comprises: fixedly connect the wing protrusion and the arm recess after an auxiliary bolt is inserted through a threaded hole of the reinforcing part.

Preferably, the bearing capacity of a single main bolt ranges from 1.8 tons to 2.2 tons; and/ or the bearing capacity of a single auxiliary bolt ranges from 680 kg to 720 kg.

The invention further provides an unmanned aerial vehicle, which comprises an arm mounted using the quick mounting method of an outboard arm described in the scheme.

The invention has the following advantages: the outboard arm of the invention is installed on the unmanned aerial vehicle (UAV), and the takeoff load of the UAV can be raised from about 1.5 tons to about 2 tons. At the same time, the outboard arm is equipped with the corresponding motor, which will produce noise during operation. After the outboard arm is disassembled, the corresponding reduced motor will have a noise reduction effect.

Secondly, the invention further adopts the bolt clamping form to fix the outboard arm and the wing, in which eight bolts are the main fixing bolts and bear most of the load. In addition to the main fixing bolts, there are several small bolts at the front and back edges of the arm to assist the force. During installation, first insert eight main bolts from the openings on the wing, align with the threaded holes on the outboard arm and tighten the bolts, and then tighten the auxiliary fixing bolts successively to complete the quick mounting of the outboard arm. In the same way, after removing the main bolts and auxiliary bolts, the outboard arm can be quickly installed and removed within 30 minutes.

### BRIEF DESCRIPTION OF DRAWINGS

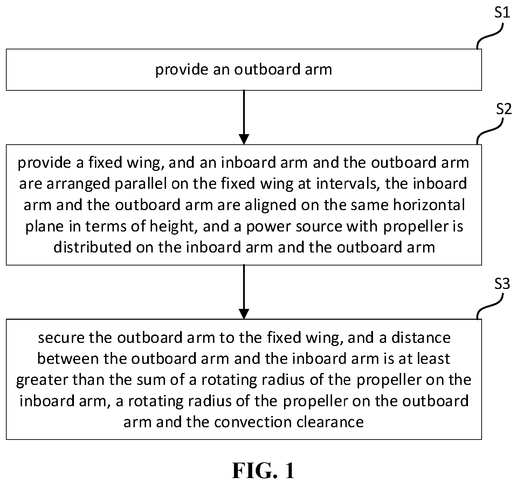

FIG. 1 is a flow chart of the quick mounting method of the outboard arm of the invention;
FIG. 2 is a schematic diagram of the outboard arm and wing of the invention;

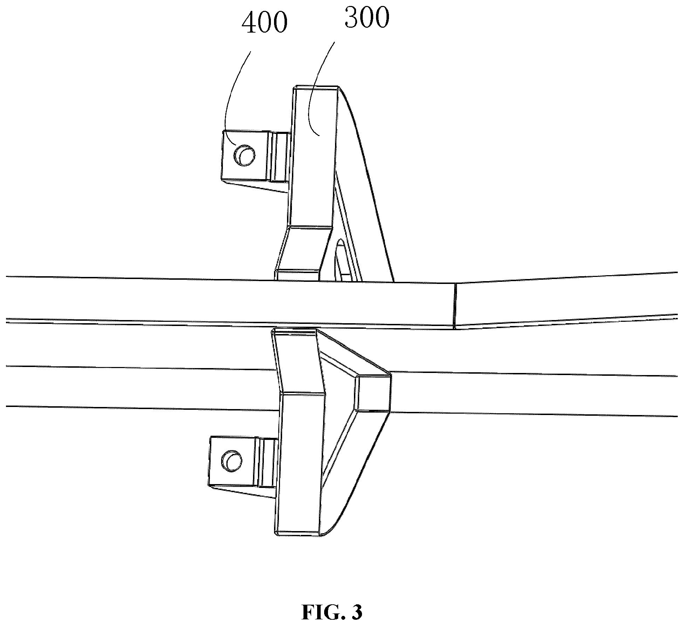

FIG. 3 is a schematic diagram of a fixing seat and a fastener support of the invention.

### DETAILED DESCRIPTION

The following embodiments further describe the technical teaching of this invention. It is understood that the specific embodiments described herein are for the purpose of interpreting this invention only. It should also be noted that, for ease of description, only the parts related to this invention are shown in the attached drawings, not all of them.

In the description of this invention, it should be noted that, unless otherwise expressly specified and limited, the terms "installation", "connection", "connection" shall be understood broadly, for example, may be fixed or removable connections. It can be a mechanical connection, it can also be an electrical connection. It can be directly connected, or it can be indirectly connected through an intermediate medium, and it can be the connection within the two components. For persons of ordinary skill in the art, the specific meaning of the above terms in this invention may be understood on a case-by-case basis.

In this invention, unless otherwise expressly specified and limited, the first feature may include direct contact between the first and second features "above" or "below" the second features, or may include contact between the first and second features not directly but through another feature between them. Furthermore, the first feature "above", "above" and "above" the second feature include the first feature being directly above and diagonally above the second feature, or simply indicating that the first feature is at a higher level than the second feature. The first feature "below", "below", and "below" the second feature include the first feature being directly below and diagonally below the second feature, or simply indicating that the first feature is less horizontal than the second feature.

This invention provides a quick mounting method for an outboard arm, comprising:
S1: provide an outboard arm 100.
S2: provide a fixed wing 200, and the inboard arm and the outboard arm 100 are arranged in parallel on the fixed wing 200 at intervals, the inboard arm and the outboard arm are aligned on the same horizontal plane in terms of height, and the power source with propeller is distributed on the inboard arm and on the outboard arm 100.
S3: secure the outboard arm 100 to the fixed wing 200, and the distance between the outboard arm 100 and the inboard arm is at least greater than the sum of the rotating radius of the propeller on the inboard arm, the rotating radius of the propeller on the outboard arm, and a convection clearance. Preferably, the convection clearance is 8% to 15% of the maximum of the propeller diameters on the outboard arm 100 and on the inboard arm.

Specifically, for the outboard arm, on one hand, from the perspective of the overall structural design of the aircraft, the outboard arm is required to be close to the central axis of the aircraft in order to reduce the weight of the aircraft and save more weight and space to increase power and payload. On the other hand, according to the aerodynamic requirements, when the propeller is operating, the corresponding air flow will be generated. If the outboard arm and the inboard arm are installed too close, flow interference will be generated, and vortices will be formed after the interference to decrease the efficiency of the lift motor. Therefore, the installation of the outboard arm 100 and the inboard arm cannot be too close. However, if it is too far away, the weight of the aircraft will inevitably increase. Therefore, when the convection clearance is 8% to 15% of the maximum of the propeller diameters on the outboard arm and on the inboard arm, the interference vortex generated between the outer and inner arms and the weight of the aircraft can be balanced, and the aircraft payload and aerodynamic efficiency can be met at the same time.

Further, the mounting method for fixing the outboard arm 100 to the fixed wing 200 comprises fixing the outboard arm 100 to the leading edge of the fixed wing 200, or fixing the outboard arm 100 to the trailing edge of the fixed wing 200, or fixing the outboard arm 100 to the leading edge and to the trailing edge of the fixed wing 200 respectively. Installed to the leading edge or to the trailing edge alone, or to both the leading edge and to the trailing edge, it can adjust the center of gravity of the aircraft to different positions.

In particular, the outboard arm 100 comprises an arm recess 101, the cross section of the arm recess 101 in the longitudinal direction is an inverted isosceles trapezoid and is used to fit the contour separation surface of the fixed wing 200.

The inverted isosceles trapezoid of arm recess 101 meets the aerodynamic surface requirements.

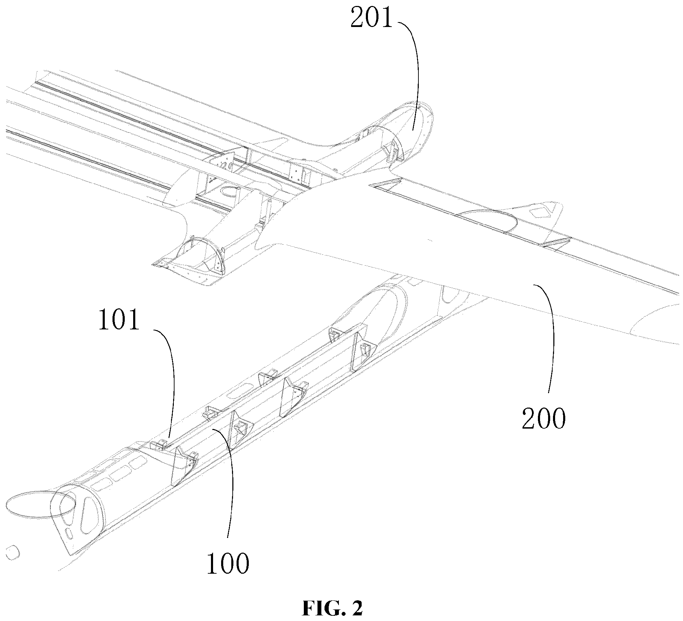

As shown in Figure 2, the arm recess 101 is provided with a reinforcing rib and a plurality of fixing seats 300 in its longitudinal direction; before the S3 it further comprises:
S300: after aligning the outboard arm 100 in the width direction with the reinforcing rib as the symmetry center, attach a pair of fixing seats 300 on the arm recess 101 at intervals in the longitudinal direction of the outboard arm 100.

The reinforcing rib can compensate for the stress loss caused by the recessed part.

Further, the fixed wing 200 is provided with a wing protrusion 201 at the connection position with the outboard arm, and the section of the wing protrusion 201 is isosceles trapezoid in the direction of its length. The S300 also comprises: cover the arm recess 101 with the wing protrusion 201.

The isosceles trapezoid of the wing protrusion 201 meets aerodynamic surface requirements.

In particular, each fixing seat 300 is fixedly provided with a fastener support 400, each fastener support 400 is provided with a threaded hole, and the wing protrusion 201 is provided with an opening corresponding to each threaded hole.

S3 comprises:
After inserting a main bolt through the opening on the wing protrusion 201, attach the wing protrusion 201 to the arm recess 101 through the threaded hole in the fastener support 400.

The main fixing bolts are preferably eight bolts, carrying most of the load, and the bearing capacity range of a single main bolt is 1.8-2.2 tons.

Further, the wing protrusion 201 is provided with a reinforcing part along its length direction, and the reinforcing part is provided with threaded holes at equal intervals on the outer circumferential surface near the junction connected with the arm recess 101, and corresponding threaded holes are provided in the arm recess 101.

The S3 comprises: after the auxiliary bolt is inserted through the threaded hole of the reinforcing part, the wing protrusion 201 and the arm recess 101 are securely connected.

The auxiliary bolt carries part of the load, mainly the stress from the skin.

Preferably, the bearing capacity of each auxiliary bolt ranges from 680 kg to 720 kg.

The scheme uses bolt clamping to fix the outboard arm and the fixed wing, among which eight bolts are the main fixing bolts, carrying most of the load. Besides the main fixing bolts, there are several small bolts at the front and back edges of the arm to assist the force. During installation, first insert eight main bolts from the openings on the wing aligned with the threaded holes on the outboard arm and tighten the bolts, and then tighten the auxiliary fixing bolts successively to complete the quick mounting of the outboard arm. In the same way, after removing the main bolts and auxiliary bolts, the outboard arm can be quickly installed and removed within 30 minutes.

The present invention further provides an unmanned aerial vehicle (UAV) comprising an arm mounted using the quick mounting method of the outboard arm described in the above scheme.

The outboard arm is installed on the UAV, and the takeoff load of the UAV can be raised from about 1.5 tons to about 2 tons. At the same time, the outboard arm is equipped with the corresponding motor, which will produce noise during operation. After the outboard arm is disassembled, the corresponding reduced motor will have a noise reduction effect.

The above embodiments are illustrative only of the principle and efficacy of this invention. The above embodiments may be modified or altered by any person familiar with the technology without prejudice to the purposes of this invention. Therefore, all equivalent modifications or alterations made by persons with ordinary knowledge in the field of the technology to which they belong, which are not divorced from the purposes revealed in this invention, shall still be covered by the claims of this invention.

## Claims

1. A quick mounting method for an outboard arm, comprising:
S1: provide an outboard arm (100);
S2: provide a fixed wing (200), and an inboard arm and the outboard arm (100) are arranged in parallel on the fixed wing (200) at intervals, the inboard arm and the outboard arm (100) are aligned on the same horizontal plane in terms of height, and a power source with propeller is distributed on the inboard arm and on the outboard arm (100);
S3: secure the outboard arm (100) to the fixed wing (200), and a distance between the outboard arm (100) and the inboard arm is at least greater than the sum of a rotating radius of the propeller on the inboard arm, a rotating radius of the propeller on the outboard arm (100), and a convection clearance.

2. The quick mounting method of an outboard arm according to claim 1, wherein the convection clearance is defined as 8% to 15% of a maximum of a propeller diameter on the outboard arm (100) and on the inboard arm.

3. The quick mounting method of an outboard arm according to claim 1, wherein the mounting method of securing the outboard arm (100) to the fixed wing (200) comprises: secure the outboard arm (100) to the leading edge of the fixed wing (200), or secure the outboard arm (100) to the trailing edge of the fixed wing (200), or secure the outboard arm (100) to the leading edge and to the trailing edge of the fixed wing (200) respectively.

4. The quick mounting method of an outboard arm according to claim 1, wherein the outboard arm (100) comprises an arm recess (101), a cross section of the arm recess (101) in the longitudinal direction is an inverted isosceles trapezoid and is used to fit a contour separation surface of the fixed wing (200).

5. The quick mounting method of an outboard arm according to claim 4, wherein the arm recess (101) is provided with a reinforcing rib and a plurality of fixing seats (300) in the longitudinal direction; before the S3 it further comprises S300:
after aligning the outboard arm (100) in the width direction with the reinforcing rib as the symmetry center, attach a pair of fixing seats (300) on the arm recess (101) at intervals in the longitudinal direction of the outboard arm (100).

6. The quick mounting method of an outboard arm according to claim 5, wherein the fixed wing (200) is provided with a wing protrusion (201) at a connection position with the outboard arm, and a cross section of the wing protrusion (201) in the longitudinal direction is a right isosceles trapezoid; the S300 further comprises: cover the arm recess (101) with the wing protrusion (201).

7. The quick mounting method of an outboard arm according to claim 6, wherein a fastener support (400) is provided on each fixing seat (300), each fastener support (400) is provided with a threaded hole, and the wing protrusion (201) is provided with an opening corresponding to each threaded hole;
the S3 comprises:
after a main bolt is inserted through the opening on the wing protrusion (201), the wing protrusion (201) and the arm recess (101) are fixedly connected through the threaded hole of the fastener support (400).

8. The quick mounting method of an outboard arm according to claim 6, the wing protrusion (201) is provided with a reinforcing part along its length, and the reinforcing part is provided with a threaded hole at an equal interval on an outer circumferential surface near a junction connected with the arm recess (101), and a corresponding threaded hole is provided in the arm recess (101);
the S3 comprises: after inserting an auxiliary bolt through the threaded hole in the reinforcing part, fixedly connect the wing protrusion (201) to the arm recess (101).

9. The quick mounting method of an outboard arm according to claim 8, wherein a bearing capacity range of a single main bolt is 1.8 to 2.2 tons; and/ or the bearing capacity of a single auxiliary bolt ranges from 680 kg to 720 kg.

10. An unmanned aerial vehicle, comprising an arm mounted using the quick mounting method of the outboard arm according to any one of claims 1-9.
